# EUROPEAN PATENT SPECIFICATION

(11) **EP 3 547 642 B1**
(45) Date of publication and mention of the grant of the patent: **15.07.2020**
(21) Application number: 19165159.5
(22) Date of filing: 26.03.2019
(51) Int. Cl.: H04L 9/08, H04L 29/06, H04L 12/753, H04L 9/32

(54) **SECURE COMMUNICATION IN A NONDETERMINISTIC NETWORK**
SICHERE KOMMUNIKATION IN EINEM NICHT DETERMINISTISCHEN NETZWERK
COMMUNICATION SÉCURISÉE DANS UN RÉSEAU NON DÉTERMINISTE

(30) Priority: 27.03.2018 US 201815936895
(43) Date of publication of application: 02.10.2019
(73) Proprietor: Lenovo (Singapore) Pte. Ltd., Singapore 556741 (SG)
(72) Inventor: Waltermann, Rod D., Rougemont, NC North Carolina 27572 (US); Pennisi, Joseph, Apex, NC North Carolina 27502 (US)
(74) Representative: Leffers, Thomas

(56) References cited:
- JP-A- 2007 005 898
- US-A1- 2005 108 576
- US-A1- 2017 237 553

## Description

### FIELD

The subject matter disclosed herein relates to secure communication and more particularly relates to secure communication in a nondeterministic network.

### BACKGROUND

Nodes often communicate in nondeterministic networks. JP 2007 005 898 A discloses a source node that determines a message transfer route from a source to a final target node on a network, and a route for replying a delivery certificate from a relay node to the source for each relay node on the message transfer route.

### BRIEF SUMMARY

A system, a method and a computer program product according to the independent claims for secure communication in a nondeterministic network is disclosed.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1A is a schematic diagram illustrating one embodiment of a nondeterministic network;
Figure 1B is a schematic diagram illustrating one embodiment of a communication path;
Figure 1C is a schematic diagram illustrating one alternate embodiment of a communication path;
Figure 2A is a schematic block diagram illustrating one embodiment of a message;
Figure 2B is a schematic block diagram illustrating one embodiment of communication path data;
Figure 2C is a schematic block diagram illustrating one embodiment of a communication path database;
Figure 2D is a schematic block diagram illustrating one embodiment of a block chain record;
Figure 2E is a schematic block diagram illustrating one embodiment of a set of encryption keys;
Figure 2F is a schematic block diagram illustrating one embodiment of node encryption keys;
Figure 3A is a schematic block diagram illustrating one embodiment of an encrypted message;
Figure 3B is a schematic block diagram illustrating one alternate embodiment of an encrypted message;
Figure 4 is a schematic block diagram illustrating one embodiment of a node; and
Figure 5 is a schematic flow chart diagram illustrating one embodiment of a secure communications method.

### DETAILED DESCRIPTION

As will be appreciated by one skilled in the art, aspects of the embodiments may be embodied as a system, method or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules and may be embodied in any suitable form and organized within any suitable type of data structure. The operational data may be collected as a single data set or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which comprises one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

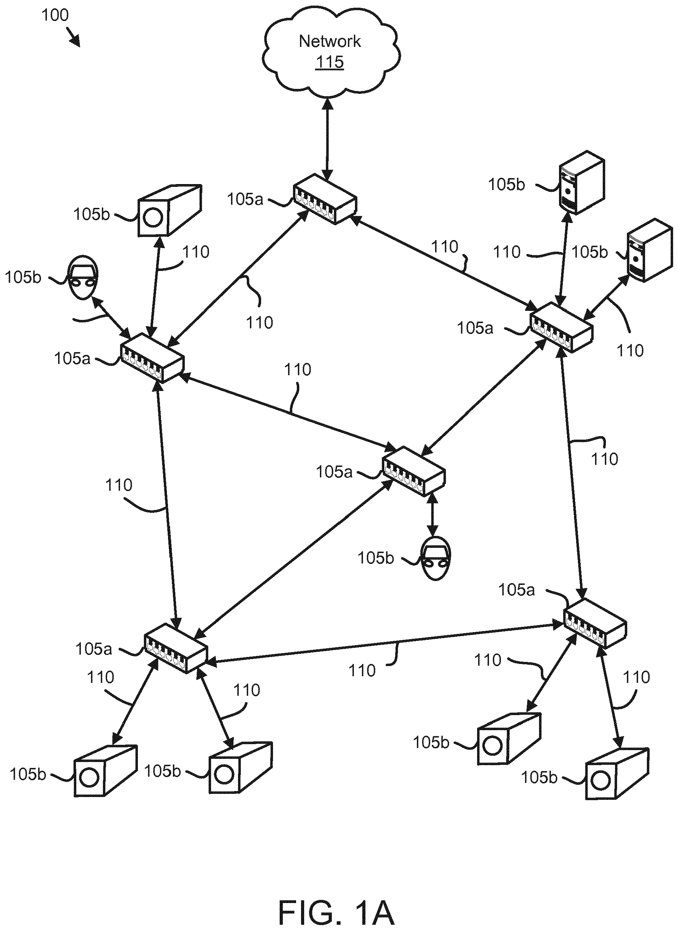

Figure 1A is a schematic diagram illustrating one embodiment of a nondeterministic network 100. The nondeterministic network 100 may support communication between a plurality of nodes 105. In one embodiment, the nondeterministic network 100 is an Internet of Things (IoT) network. In the depicted embodiment, the nondeterministic network 100 includes a plurality of device nodes 105b and a plurality of router nodes 105a. The nodes 105 are connected by edges 110. An edge 110 may be a wired connection, a wireless connection, or combinations thereof. The nondeterministic network 100 may further be in communication with a network 115 such as a local area network, a wide-area network, a Wi-Fi network, a mobile telephone network, the Internet, or combinations thereof.

Communications between the nodes 105 are nondeterministic. For example, a first message communicated between two nodes could take a first communication path while a second message communicated between the same two nodes 105 could take a second communication path. A node 105 along the communication path may be referred to as a path node 105.

Unfortunately, the nondeterministic nature of the network 100 makes the nondeterministic network 100 vulnerable to tampering. For example, a malicious actor could compromise one of the nodes 105 and use the compromised node 105 to intercept and/or modify communications between the nodes 105, access the network 115, and otherwise perform unauthorized and/or malicious actions.

The embodiments described herein determines communications paths and communicates encrypted messages over the communication paths to secure the nondeterministic network 100. As a result, other nodes 105, the nondeterministic network 100, and the network 115 remain secure even if a first node 105 is compromised.

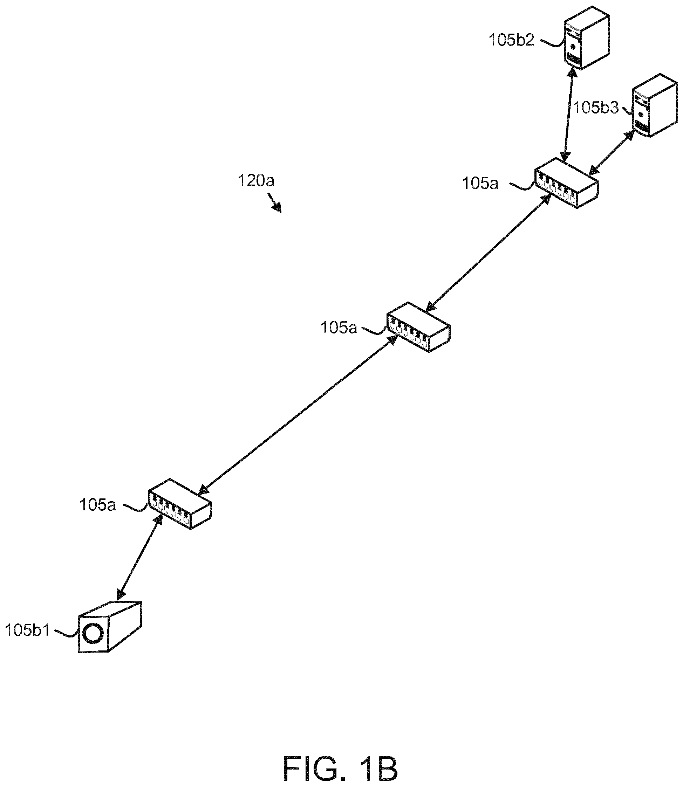

Figure 1B is a schematic diagram illustrating one embodiment of a first communication path 120a. In one embodiment, a first node 105b1 may transmit a first message over the first communication path 120a to a first destination node 105b2 in the nondeterministic network 100 of Figure 1A. The first communication path 120a may be determined at a boot of the first node 105b1. In addition, the first communication path 120a may be determined at a boot of the nondeterministic network 100. In one embodiment, the first communication path 120a is determined dynamically in response to the message being ready to transmit.

In addition, if the first destination node 105b2 is unable to receive the message that is communicated over the first communication path 120a, an alternate destination node 105b3 may receive the message for the first destination node 105b2.

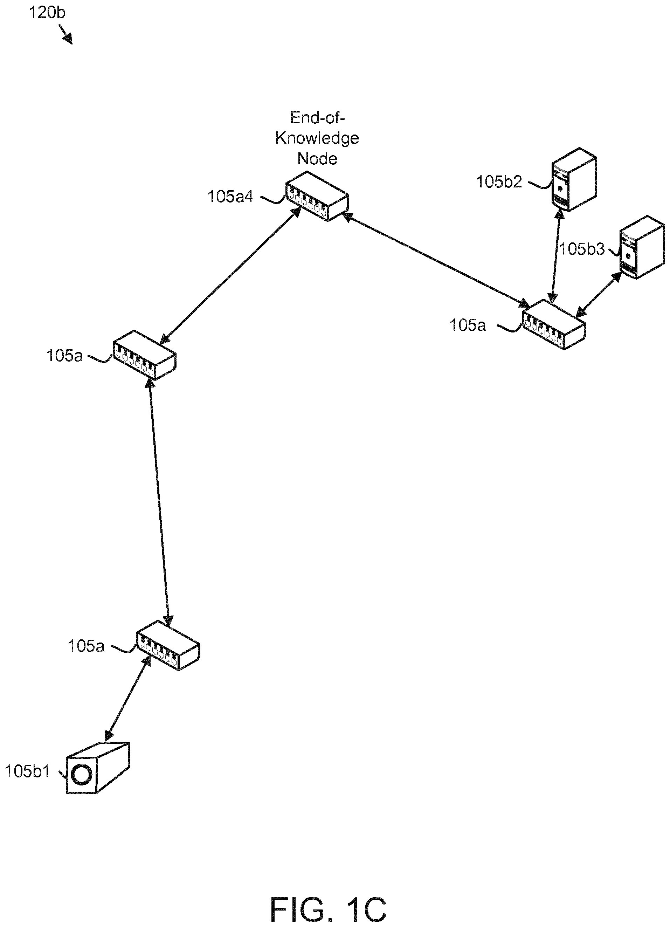

Figure 1C is a schematic diagram illustrating one alternate embodiment of a communication path 120. In the depicted embodiment, a second communication path 120b is shown between the first node 105b1 and the first destination node 105b2 of the nondeterministic network of Figure 1A. A second message may be communicated over the second communication path 120b to the first destination node 105b2.

In an alternate embodiment, the message is communicated to an end-of-knowledge node 105a4 as the first destination node. The end-of-knowledge node 105a4 may be a node 105 that the first node 105b1 has knowledge of and is believed to be in communication with a second and/or final destination node 105b2. The message may be communicated from the first node 105b1 to the first destination node 105a4 over one communication path 120 and from the first destination node 105a4 to the second destination node 105b2 over another communication path 120.

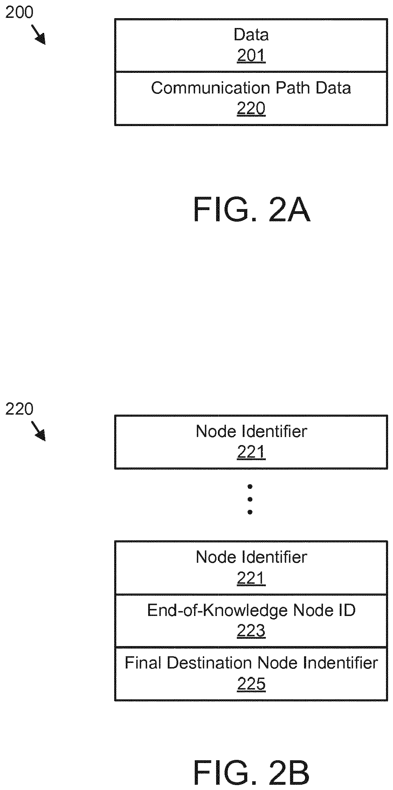

Figure 2A is a schematic block diagram illustrating one embodiment of a message 200. The message 200 may be organized as a data structure in a memory. In addition, the message 120 may be transmitted as organized data over an edge 110 between nodes 105. In the depicted embodiment, the message 200 includes data 201 and communication path data 220. The data 201 may be generated by the first device 105b1 and be independent of the communication path data 220. The communication path data 220 may describe the communication path 120. The communication path data 220 is described in more detail in Figure 2B.

Figure 2B is a schematic block diagram illustrating one embodiment of the communication path data 220. In the depicted embodiment, the communication path data 220 includes a plurality of node identifiers 221. Each node identifier 221 may identify a path node 105 in the communication path 120. In a certain embodiment, the node identifiers 221 are listed in a sequential order wherein the message 200 is communicated from path node 105 to path node 105 in the sequential order.

In one embodiment, the communication path data 220 includes one or more of an end-of-knowledge node identifier 223 and a final destination node identifier 225. The end-of-knowledge node identifier 223 may be included to send the message 200 to a final destination node 105 that is beyond the knowledge of sending node 105. For example, the sending node 105 may have no knowledge of communication paths 120 to the final destination node 105. As a result, the sending node 105 may identify an end-of-knowledge node 105 in the end-of-knowledge node identifier 223 as well as identifying the final destination node 105 in the final destination node identifier 225. The message 200 may be communicated over a first communication path 120 identified by the node identifiers 221 to the end-of-knowledge node 105 identified by the end-of-knowledge node identifier 223. The end-of-knowledge node 105 may then determine a second communication path 120 to a second destination node 105. The second destination node 105 may be another end-of-knowledge node 105 that is specified in the end-of-knowledge node identifier 223 with the final destination node 105 specified in the final destination node identifier 225. Alternatively, the second destination node 105 may be the final destination node 105 and may be specified with the final destination node identifier 225. The use of the end-of-knowledge node identifier 223 and the final destination node identifier 225 allows the sending node 105 to communicate messages 200 to destination nodes 105 for which the sending node 105 has only an incomplete knowledge of the intervening nodes 105.

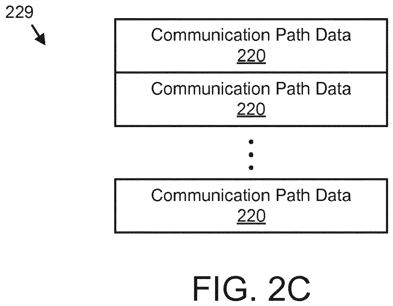

Figure 2C is a schematic block diagram illustrating one embodiment of the communication path database 229. The communication path database 229 may be a centralized database that stores communication paths 120 for a plurality of nodes 105. For example, a router node 105a may maintain the communication path database 229. The communication path database 229 may store communication path data 220 for a plurality of communication paths 120.

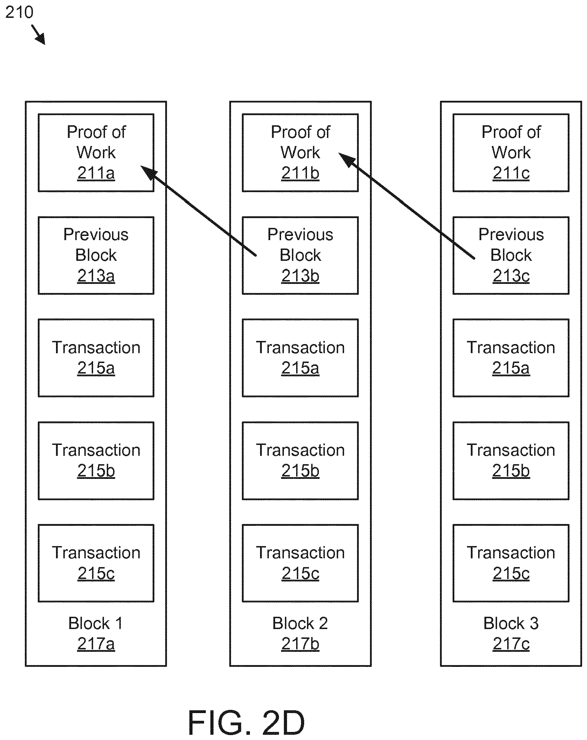

Figure 2D is a schematic block diagram illustrating one embodiment of a block chain record 210. The block chain record 210 may be used to record message transactions 215 between nodes. The block chain record 210 includes multiple blocks 217. For simplicity, three blocks 217a-c are shown in the depicted embodiment. However, any number of blocks 217 may be employed. Each block 217 may be stored on a node 105. The blocks 217 of the block chain record 210 may be shared and synchronized across multiple nodes 105. Some nodes 105 may each independently maintain a block chain record 210 with multiple blocks 217.

Each block 217 may record a plurality of message transactions 215. The message transactions 215 may be hashed. In one embodiment, the hashed message transactions 215 for each block 217 are compared. The block 217 may only recorded to the block chain record 210 if there is consensus for each instance of the block 217.

In one embodiment, a proof of work 211 is calculated for each block 217. The proof of work 211 may be calculated to have a cryptographic feature that is difficult to calculate but easy to verify. In one embodiment, the proof of work 231 incorporates previous blocks 213. The proof of work 231 may be used to validate the self-consistency of each block 217 of the block chain record 210.

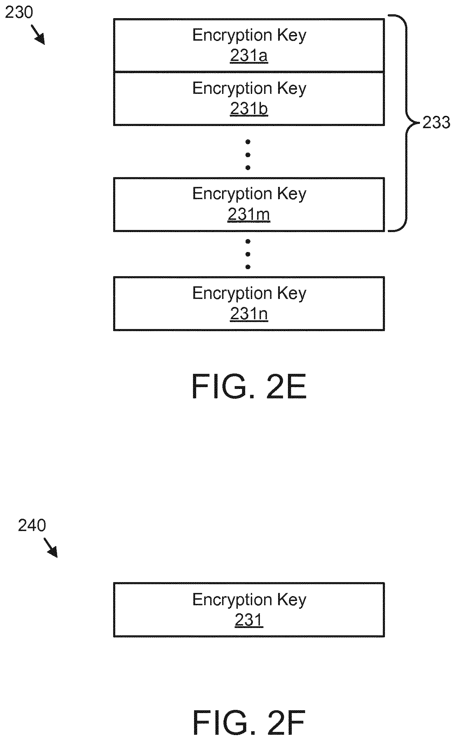

Figure 2E is a schematic block diagram illustrating one embodiment of a set 230 of encryption keys 231. The set 230 of encryption keys 231 includes a plurality of N encryption keys 231. The set 230 of encryption keys 231 may be used to encrypt the message 200. For example, a sending node 105 may use the set 230 of encryption keys 231 to encrypt the message 200. In one embodiment, only a subset 233 of M encryption keys 231 of the set 230 of N encryption keys 231 is needed to decrypt the message 200. For example, a destination node 105 may used the subset 233 of the set 230 of encryption keys 231 to decrypt an encrypted message.

Figure 2F is a schematic block diagram illustrating one embodiment of node encryption keys 240. In the depicted embodiment, a node 105 may have an encryption key 231. The encryption key 231 may be used by a path node 105 to partially decrypt an encrypted message when the message 200 is received at the path node 105. In addition, the encryption key 231 may be supplied by a key holding nod 105 to a destination node 105.

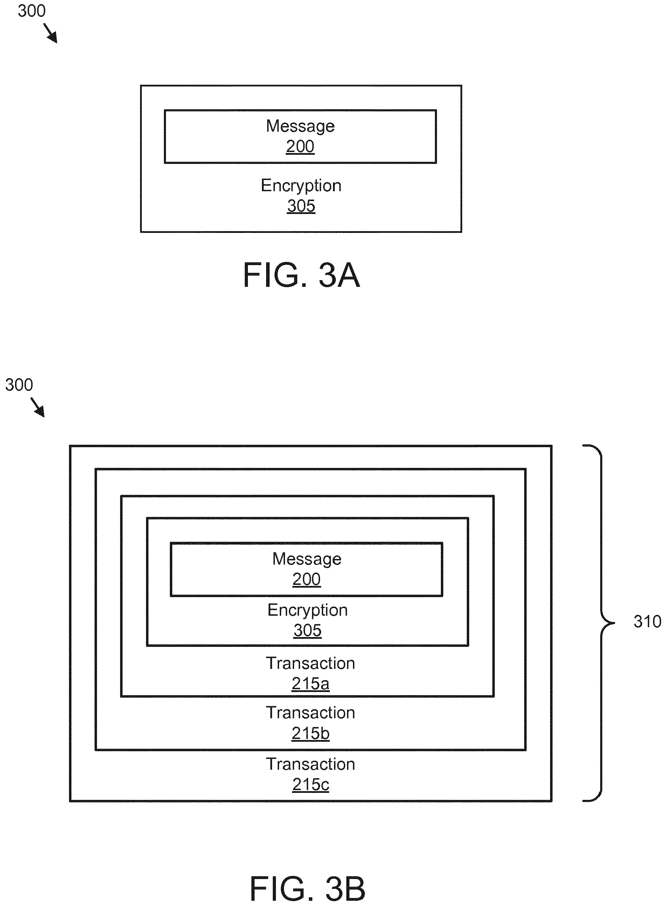

Figure 3A is a schematic block diagram illustrating one embodiment of an encrypted message 300. In the depicted embodiment, the message 200 is encrypted with an encryption 305. The encryption 305 may be made using the set 230 of encryption keys 231. In addition, the single encryption 305 may be decrypted with the subset 233 of the set 230 of encryption keys 231.

Figure 3B is a schematic block diagram illustrating one alternate embodiment of the encrypted message 300. In the depicted embodiment, the message 200 is encrypted with the encryption 305 as shown in Figure 3A. each subsequent transaction of the encrypted message 300 by a path node 105 is recorded as a message transaction 215 of an onion skin record 310, wherein each subsequent message transaction 215 encapsulates previous message transactions 215, the encryption 305, and the message 200. The onion skin record 310 may comprise a plurality of layers of message transactions 215. Each layer may represent a message transaction 215. In addition, each layer may be signed by a node 105 and appended to the encrypted message 300. The destination node 105 may validate the signature of each node 105.

In one embodiment, each path node 105 that transacts the encrypted message 300 decrypts a portion of the encryption 305 with the encryption key 231 of the path node 105. The encryption 305 of the message 200 may remain, but the subsequent encryption 305 does not include the encryption key 231 of the transacting path node 105.

In one alternate embodiment, each transaction 215 further encrypts the encrypted message 300 with the encryption key 231 of the node 105 performing the transaction 215.

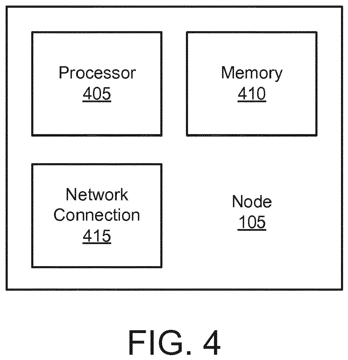

Figure 4 is a schematic block diagram illustrating one embodiment of a node 105. In the depicted embodiment, the node 105 includes a processor 405, a memory 410, and a network connection 415. The memory 410 may include a semiconductor storage device, hard disk drive, an optical storage device, a micromechanical storage device, or combinations thereof. The memory 410 may store code. The processor 405 may execute the code. The network connection 415 may communicate with other nodes 105 in the nondeterministic network 100.

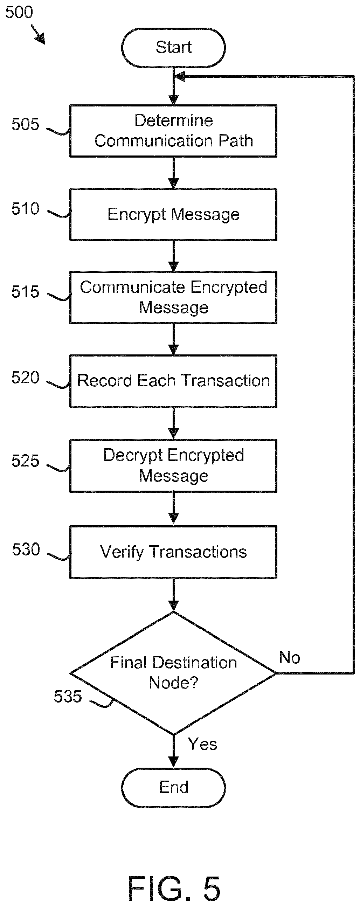

Figure 5 is a schematic flow chart diagram illustrating one embodiment of a secure communications method 500. The method 500 may securely communicate messages 200 between the nodes 105 of the nondeterministic network 100. The method 500 may be performed by one or more nodes 105 and/or the processors 405 thereof.

The method 500 starts, and in one embodiment, the processor 405 determines 505 a communication path 120 to a destination node 105 in a network of nodes 105. The network of nodes 105 may be the nondeterministic network 100. In addition, the network of nodes 105 may be organized as an undirected graph, wherein edges 110 between the nodes 105 are bidirectional communication channels.

The destination node 105 may be the final destination node 105 specified by the final destination node identifier 225. Alternatively, the destination node 105 may be an end-of-knowledge node 105. The node identifier 221 for the end-of-knowledge node 105 may be recorded as the end-of-knowledge node identifier 223. The node identifier 221 of the final destination node 105 may be recorded as the final destination node identifier 225.

The communication path 120 may be a spanning tree of the path nodes 105 of the undirected graph. The spanning tree may be a subset of the nondeterministic network 100 wherein all the nodes 105 are covered with a minimum possible number of edges 110. As a result, the spanning tree does not have cyclical connections wherein two nodes 105 are connected by more than one communication path 120. Therefore, each path node 105 of the communication path 120 is known.

In one embodiment, the communication path 120 is recorded in a data structure such as the communication path data 220 and appended to the message 200 as shown in Figure 2A. In addition, the communication path 120 may be recorded as a data structure such as the communication path data 220 in the communication path database 229.

The processor 405 may encrypt 510 the message 200 to a first destination node 105 with an encryption 305. The encryption 305 may use each encryption key 231 of the set 230 of encryption keys 231. The encryption keys 231 of the set 230 are known because each path node 105 of the communication path 120 is also known. The encryption 305 may only use the subset 233 of the set 230 of encryption keys 231 to decrypt. In a certain embodiment, the message 200 is encrypted 510 with a ledger encryption algorithm.

The processor 405 may further communicate 515 the encrypted message 300 over the path nodes 105 of the communication path 120. In one embodiment, each transaction 215 of each path node 105 with the message 200 and/or encrypted message 300 is recorded. Each transaction 215 may be recorded as a block chain record 210 as described in Figure 2D. The blocks 217 of the block chain record 210 may be recorded at one or more accounting nodes 105.

In one embodiment, each transaction 215 of each path node 105 with the message 200 and/or encrypted message 300 is recorded as an onion skin record 310 as shown in Figure 3B. The onion skin record 310 may include a plurality of layers. Each layer may be a message transaction 215 and may be signed by the path node 215 that transacts the message 200 and/or the encrypted message 300. The layer may be appended to the message 200 and/or encrypted message 300. The ledger encryption algorithm may encrypt the message transactions 215 and/or blocks 217 of the block chain records 210 of Figure 2D.

The processor 405 may decrypt 525 the encrypted message 300. In one embodiment, the encrypted message 300 is decrypted 525 at the destination node 105 with the subset 233 of the set 230 of encryption keys 231. The subset 233 of encryption keys 231 may be held by key holding nodes 105 in communication with the destination node 105. In one embodiment, the destination node 105 acquires the encryption keys 231 of the subset 233 from the key holding nodes 105. For example, the destination node 105 may request three encryption keys 231 from three key holding nodes 105. The key holding nodes 105 may share edges 110 with the destination node 105.

In a certain embodiment, each path node 105 that transacts the encrypted message 300 decrypts 525 the encrypted message 300 with one encryption key 231 of the subset 233 of encryption keys 231 and the destination node 105 decrypts 525 the encrypted message 300 with another encryption key 231 of the subset 233 of encryption keys 231. As a result, the encrypted message 300 must be transacted by each path node 105 of the communication path 120 to be decrypted 525.

The processor 405 may verify 530 each message transaction 215 along the communication path 120. The message transactions 215 along the communication path 120 may be verified 530 at the destination node 105. In one embodiment, the message transactions 215 of the onion skin 310 are inspected for tampering. In addition, the message transactions 215 of one or more blocks 217 may be inspected for tampering.

The processor 405 may determine 535 if the destination node 105 is a final destination node 105. The processor 405 may compare the node identifier 221 of the destination node 105 with the end-of-knowledge node identifier 223 and the final destination node identifier 225. If the node identifier 221 of the destination node 105 is the final destination node identifier 225, the destination node 105 is the final destination node 105 and the method 500 ends.

If the node identifier 221 of the destination node 105 is the end-of-knowledge node identifier 223, the processor 405 may determine 505 a second communication path 120 to a second destination node 105. The second destination node 105 may be the final destination node 105 specified by the final destination node identifier 225. Alternatively, the second destination node 105 may be an end-of-knowledge node 105. The node identifier 221 for the end-of-knowledge node 105 may be recorded as the end-of-knowledge node identifier 223.

The processor 405 may further encrypt 510 the message 200 to the second destination node 105 with an encryption 305 using a set 230 of second encryption keys 231. The encryption 305 may require a subset 233 of the set 230 of second encryption keys 231 to decrypt. The processor 405 may communicate 515 the encrypted message 300, record 520 each transaction 215 of each path node 105, decrypt 525 the encrypted message 300, verify 530 the transactions 215, and again determine 535 if the destination node 105 is the final destination node 105 as described above until the destination node 105 is the final destination node 105, and the method 500 ends. As a result, the message 200 may be communicated via a series of end-of-knowledge nodes 105 until the final destination node 105 is reached.

The embodiments determine a communication path 120 to a destination node 105 in a network of nodes 105 organized as an undirected graph, wherein the communication path 120 is a spanning tree of path nodes 105 of the undirected graph. As a result, each path node 105 of the communication path 120 is known. The embodiments further encrypt the message 200 to the destination node 105 with an encryption 305 requiring the subset 233 of the set 230 of encryption keys 231 to decrypt.

The embodiments further communicate the encrypted message 300 over the path nodes 105 of the communication path 120 with the encrypted message decrypted at the destination node 105 with the subset 233 of encryption keys 231. As a result, the message 200 is communicated securely within the nondeterministic network 100.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A system comprising:
a first node (105b1);
a path node (105a);
a destination node (105b2); and
network connection edges (110) between the nodes (105);
wherein each node (105) comprises a processor and a memory that stores code executable by the processor;
wherein the memory of the first node stores code executable by the processor to:
determine a first communication path (120a) to a first destination node in a network (100) of nodes (105) organized as an undirected graph, wherein the edges (110) between the nodes (105) are bidirectional communication channels, wherein the first communication path is a spanning tree of path nodes of the undirected graph;
encrypt a message to the first destination node with an encryption using a set of first encryption keys; and
communicate the encrypted message over the path nodes of the first communication path to the first destination node;
wherein the memory of each path node stores code executable by the processor to:
record each transaction of the path node with the encrypted message; and
wherein the memory of the destination node stores code executable by the processor to:
acquire a subset of the set of first encryption keys from key holding nodes (105a) in communication with the first destination node; and
decrypt the encrypted message with the subset of the set of first encryption keys.

2. The system of claim 1, wherein each transaction is recorded as a block chain record at one or more accounting nodes.

3. The system of claim 1, wherein each transaction is recorded as an onion skin record comprising a plurality of layers, each layer is signed by a node and appended to the message, and wherein the first destination node validates the signature of each node.

4. The system of claim 1, wherein the message is encrypted with a ledger encryption algorithm.

5. The system of claim 1, wherein each path node decrypts the encrypted message with one encryption key of the subset of the set of first encryption keys and the first destination node decrypts the encrypted message with another encryption key of the subset of the set of first encryption keys.

6. The system of claim 1, where the first communication path is determined at boot.

7. The system of claim 1, where the first communication path is determined dynamically in response to the message being ready to transmit.

8. The system of claim 1, wherein the first communication path is recorded in a centralized communication path database.

9. The system of claim 1, wherein the first communication path is recorded in a data structure appended to the message.

10. The system of claim 1, wherein the first destination node is an end-of-knowledge node and the first destination node further:
determines a second communication path to a second destination node; and
encrypts the message to the second destination node with an encryption comprising a set of second encryption keys and requiring a subset of the set of second encryption keys to decrypt.

11. The system of claim 1, wherein each transaction along the first communication path is verified at the destination node.

12. A method comprising:
determining, (505), by use of a processor in a first node (105b1), a first communication path (120a) to a first destination node (105b2) in a network (100) of nodes (105) organized as an undirected graph, wherein edges (110) between the nodes (105) are bidirectional communication channels, wherein the first communication path is a spanning tree of path nodes (105a) of the undirected graph;
encrypting, (510), by use of a processor in the first node, a message to the first destination node with an encryption using a set of first encryption keys;
communicating, (515), by use of a processor in the first node, the encrypted message over the path nodes of the first communication path to the first destination node;
recording, (520), by use of a processor in each path node (105), each transaction of the path node with the encrypted message acquiring, by use of a processor at the first destination node, a subset of the set of first encryption keys from key holding nodes (105a) in communication with the first destination node; and
decrypting, (525), by use of a processor at the first destination node, the encrypted message with the subset of the set of first encryption keys.

13. The method of claim 12, wherein each transaction is recorded as a block chain record at one or more accounting nodes.

14. The method of claim 12, wherein each transaction is recorded as an onion skin record comprising a plurality of layers, each layer is signed by a node and appended to the message, and wherein the first destination node validates the signature of each node.

15. The method of claim 12, wherein the message is encrypted with a ledger encryption algorithm.

16. The method of claim 12, wherein each path node decrypts the encrypted message with one encryption key of the subset of the set of first encryption keys and the first destination node decrypts the encrypted message with another encryption key of the subset of the set of first encryption keys.

17. A computer program product comprising a computer readable storage medium that stores code executable by a plurality of processors, the executable code comprising code to perform the method of claim 12.

18. The computer program product of claim 17, wherein each transaction is recorded as a block chain record at one or more accounting nodes.

19. The computer program product of claim 17, wherein each transaction is recorded as an onion skin record comprising a plurality of layers, each layer is signed by a node and appended to the message, and wherein the first destination node validates the signature of each node.

20. The computer program product of claim 17, wherein the message is encrypted with a ledger encryption algorithm.

## Patentansprüche

1. System, umfassend:
einen ersten Knoten (105b1);
einen Pfadknoten (105a);
einen Zielknoten (105b2); und
Netzwerkverbindungskanten (110) zwischen den Knoten (105);
wobei jeder Knoten (105) einen Prozessor und einen Speicher, der Code speichert, der von dem Prozessor ausführbar ist, umfasst;
wobei der Speicher des ersten Knotens Code speichert, der von dem Prozessor ausführbar ist zum:
Bestimmen eines ersten Kommunikationspfads (120a) in einem Netzwerk (100) von Knoten (105) zu einem ersten Zielknoten in einem Netzwerk von Knoten, das als ein ungerichteter Graph organisiert ist, wobei die Kanten (110) zwischen den Knoten (105) bidirektionale Kommunikationskanäle sind,
wobei der erste Kommunikationspfad ein aufspannender Baum von Pfadknoten des ungerichteten Graphs ist;
Verschlüsseln einer Nachricht an den ersten Zielknoten mit einer Verschlüsselung unter Verwendung einer Menge von ersten Verschlüsselungsschlüsseln; und
Kommunizieren der verschlüsselten Nachricht über die Pfadknoten des ersten Kommunikationspfads zu dem ersten Zielknoten;
wobei der Speicher von jedem Pfadknoten Code speichert, der von dem Prozessor ausführbar ist zum:
Aufzeichnen jeder Transaktion des Pfadknotens mit der verschlüsselten Nachricht; und
wobei der Speicher des Zielknotens Code speichert, der von dem Prozessor ausführbar ist zum
Akquirieren einer Teilmenge der Menge von ersten Verschlüsselungsschlüsseln von Schlüsselhalteknoten (105a), die sich in Kommunikation mit dem ersten Zielknoten befinden; und
Entschlüsseln der verschlüsselten Nachricht mit der Teilmenge der Menge von ersten Verschlüsselungsschlüsseln.

2. System nach Anspruch 1, wobei jede Transaktion als eine Blockkettenaufzeichnung an einem oder mehreren Abrechnungsknoten aufgezeichnet wird.

3. System nach Anspruch 1, wobei jede Transaktion als eine Zwiebelschalenaufzeichnung aufgezeichnet wird, die eine Mehrzahl von Schichten umfasst, wobei jede Schicht von einem Knoten signiert und an die Nachricht angehängt wird und wobei der erste Zielknoten die Signatur von jedem Knoten validiert.

4. System nach Anspruch 1, wobei die Nachricht mit einem Kassenbuch-Verschlüsselungsalgorithmus verschlüsselt ist.

5. System nach Anspruch 1, wobei jeder Pfadknoten die verschlüsselte Nachricht mit einem Verschlüsselungsschlüssel der Teilmenge der Menge von ersten Verschlüsselungsschlüsseln entschlüsselt und der ersten Zielknoten die verschlüsselte Nachricht mit einem anderen Verschlüsselungsschlüssel der Teilmenge der Menge von ersten Verschlüsselungsschlüsseln entschlüsselt.

6. System nach Anspruch 1, wobei der erste Kommunikationspfad beim Aufstarten bestimmt wird.

7. System nach Anspruch 1, wobei der erste Kommunikationspfad dynamisch in Erwiderung darauf bestimmt wird, dass die Nachricht bereit ist zu übertragen.

8. System nach Anspruch 1, wobei der erste Kommunikationspfad in einer zentralisierten Kommunikationspfad-Datenbank aufgezeichnet wird.

9. System nach Anspruch 1, wobei der erste Kommunikationspfad in einer Datenstruktur, die der Nachricht angehängt ist, aufgezeichnet wird.

10. System nach Anspruch 1, wobei der erste Zielknoten ein Wissensendknoten ist und der erste Zielknoten weiter:
einen zweiten Kommunikationspfad zu einem zweiten Zielknoten bestimmt; und
die Nachricht an den zweiten Zielknoten mit einer Verschlüsselung verschlüsselt, die eine Menge von zweiten Verschlüsselungsschlüsseln umfasst, und eine Teilmenge der Menge von zweiten Verschlüsselungsschlüsseln benötigt, um sie zu entschlüsseln.

11. System nach Anspruch 1, wobei jede Transaktion entlang des ersten Kommunikationspfads an dem Zielknoten verifiziert wird.

12. Verfahren, umfassend:
Bestimmen (505) eines ersten Kommunikationspfads (120a) zu einem ersten Zielknoten (105b2) in einem Netzwerk (100) von Knoten (105), das als ungerichteter Graph organisiert ist, durch Verwendung eines Prozessors in einem ersten Knoten (105b1),
wobei Kanten (110) zwischen den Knoten (105) bidirektionale Kommunikationskanäle sind,
wobei der erste Kommunikationspfad ein aufspannender Baum von Pfadknoten (105a) des ungerichteten Graphs ist;
Verschlüsseln (510) einer Nachricht an den ersten Zielknoten mit einer Verschlüsselung unter Verwendung einer Menge von ersten Verschlüsselungsschlüsseln durch Verwendung eines Prozessors in dem ersten Knoten;
Kommunizieren (515) der verschlüsselten Nachricht über die Pfadknoten des ersten Kommunikationspfads an den ersten Zielknoten durch Verwendung eines Prozessors in dem ersten Knoten;
Aufzeichnen (520) jeder Transaktion des Pfadknotens mit der verschlüsselten Nachricht durch Verwendung eines Prozessors in jedem Pfadknoten (105);
Akquirieren einer Teilmenge der Menge von ersten Verschlüsselungsschlüsseln von Schlüsselhalteknoten, die sich in Kommunikation mit dem ersten Zielknoten befinden durch Verwendung eines Prozessors in dem ersten Zielknoten; und
Entschlüsseln (525) der verschlüsselten Nachricht mit der Teilmenge der Menge von ersten Verschlüsselungsschlüsseln durch Verwendung eines Prozessors in dem ersten Zielknoten.

13. Verfahren nach Anspruch 12, wobei jede Transaktion als eine Blockkettenaufzeichnung an einem oder mehreren Abrechnungsknoten aufgezeichnet wird.

14. Verfahren nach Anspruch 12, wobei jede Transaktion als eine Zwiebelschalenaufzeichnung aufgezeichnet wird, die eine Mehrzahl von Schichten umfasst, wobei jede Schicht von einem Knoten signiert und an die Nachricht angehängt wird und wobei der erste Zielknoten die Signatur von jedem Knoten validiert.

15. Verfahren nach Anspruch 12, wobei die Nachricht mit einem Kassenbuch-Verschlüsselungsalgorithmus verschlüsselt ist.

16. Verfahren nach Anspruch 12, wobei jeder Pfadknoten die verschlüsselte Nachricht mit einem Verschlüsselungsschlüssel der Teilmenge der Menge von ersten Verschlüsselungsschlüsseln entschlüsselt und der ersten Zielknoten die verschlüsselte Nachricht mit einem anderen Verschlüsselungsschlüssel der Teilmenge der Menge von ersten Verschlüsselungsschlüsseln entschlüsselt.

17. Computerprogrammprodukt, umfassend ein computerlesbares Speichermedium, das Code speichert, der von einer Mehrzahl von Prozessoren ausführbar ist, wobei der ausführbare Code Code umfasst, um das Verfahren nach Anspruch 12 durchzuführen.

18. Computerprogrammprodukt nach Anspruch 17, wobei jede Transaktion als eine Blockkettenaufzeichnung an einem oder mehreren Abrechnungsknoten aufgezeichnet wird.

19. Computerprogrammprodukt nach Anspruch 17, wobei jede Transaktion als eine Zwiebelschalenaufzeichnung aufgezeichnet wird, die eine Mehrzahl von Schichten umfasst, wobei jede Schicht von einem Knoten signiert und an die Nachricht angehängt wird und wobei der erste Zielknoten die Signatur von jedem Knoten validiert.

20. Computerprogrammprodukt nach Anspruch 17, wobei die Nachricht mit einem Kassenbuch-Verschlüsselungsalgorithmus verschlüsselt ist.

## Revendications

1. Système comprenant :
un premier nœud (105b1) ;
un nœud de voie (105b2) ; et
des bordures de connexion de réseau (110) entre les nœuds (105)
chaque nœud (105) comprenant un processeur et une mémoire qui met en mémoire un code exécutable par le processeur ;
la mémoire du premier nœud met en mémoire le code exécutable par le processeur pour :
déterminer une première voie de communication (120a) en direction d'un premier nœud de destination dans un réseau (100) de nœuds (105) organisé sous la forme d'un graphe non orienté, les bordures (110) entre les nœuds (105) étant des canaux de communication bidirectionnelle,
la première voie de communication étant un arbre de recouvrement de nœuds de voie du graphe non orienté ;
chiffrer un message destiné au premier nœud de destination à l'aide d'un chiffrement se servant d'un ensemble de premières clés de chiffrement ; et
communiquer le message chiffré par les nœuds de voie de la première voie de communication au premier nœud de destination ;
la mémoire de chaque nœud de voie met en mémoire un code exécutable par le processeur pour :
enregistrer chaque transaction du nœud de voie avec le message chiffré ; et
la mémoire du nœud de destination mettant en mémoire le code exécutable par le processeur pour :
acquérir un sous-ensemble de l'ensemble des premières clés de chiffrement à partir des nœuds de conservation de clé (105a)
en communication avec le premier nœud de destination ; et déchiffrer le message chiffré à l'aide du sous-ensemble de l'ensemble des premières clés de chiffrement.

2. Système selon la revendication 1, chaque transaction étant enregistrée sous la forme d'un enregistrement de chaîne de blocs au niveau d'un ou de plusieurs nœuds de compte.

3. Système selon la revendication 1, chaque transaction étant enregistrée sous la forme d'un enregistrement sous forme de papier pelure comprenant une pluralité de couches, chaque couche étant signée par un nœud et annexée au message, et le premier nœud de destination validant la signature de chaque nœud.

4. Système selon la revendication 1, le message étant chiffré à l'aide d'un algorithme de chiffrement de registre.

5. Système selon la revendication 1, chaque nœud de voie déchiffrant le message chiffré à l'aide d'un clé de chiffrement du sous-ensemble de l'ensemble des premières clés de chiffrement et le premier nœud de destination déchiffrant le message chiffré à l'aide d'une autre clé de chiffrement du sous-ensemble de l'ensemble de premières clés de chiffrement.

6. Système selon la revendication 1, la première voie de communication étant déterminée au démarrage.

7. Système selon la revendication 1, la première voie de communication étant déterminée dynamiquement en réponse au message qui est prêt à être transmis.

8. Système selon la revendication 1, la première voie de communication étant enregistrée dans une base de données de voies de communication centralisée.

9. Système selon la revendication 1, la première voie de communication étant enregistrée dans une structure de données annexée au message.

10. Système selon la revendication 1, le premier nœud de destination étant un nœud de fin de connaissance et le premier nœud de destination :
Déterminant en outre une seconde voie de communication vers un second nœud de destination ; et
Chiffrant le message au niveau du second neoud de destination à l'aide d'un chiffrement comprenant un ensmeble de secondes clés de chiffrement et demandant un sous-ensemble de l'ensmeble de secondes clés de chiffrement pour déchiffrer.

11. Système selon la revendication 1, chaque transaction le long de la voie de communication étant vérifiée au niveau du nœud de destination.

12. Procédé consistant à :
Déterminer, (505), à l'aide d'un processeur dans un premier nœud (105b1), une première voie de communication (120a) vers un premier nœud de destination (105b2) dans un réseau (100) de nœuds (105) organisé en tant que graphique non orienté, les bordures (110) entre les nœuds (105) étant des canaux de communication bidirectionnelle, la première voie de communication étant un arbre de recouvrement de nœuds de voie (105a) du graphe non orienté ;
Chiffrer (510), à l'aide d'un processeur dans le premier nœud, un message au premier nœud de destination à l'aide d'un chiffrement se servant d'un ensemble de premières clés de chiffrement ;
Communiquer (515), à l'aide d'un processeur dans le premier nœud, le message chiffré sur les nœuds de la première voie de communication au niveau du premier nœud de destination ;
Enregistrer (520), à l'aide d'un processeur, dans chaque nœud de voie (105) chaque transaction du nœud de voie à l'aide du message chiffré,
Acquérir à l'aide d'un processeur dans le premier nœud de destination, un sous-ensemble de l'ensemble de premières clés de chiffrement à partir des nœuds de conservation de clé (105a) en communication avec le premier nœud de destination ; et
Déchiffrer, (525) à l'aide d'un processeur au niveau du premier nœud de destination, le message chiffré à l'aide du sous-ensemble de l'ensemble de premières clés de chiffrement.

13. Procédé selon la revendication 12, chaque transaction étant enregistrée en tant qu'enregistrement de chaîne de blocs au niveau d'un ou plusieurs nœuds de compte.

14. Procédé selon la revendication 12, chaque transaction étant enregistrée sous la forme d'enregistrement pelure comprenant une pluralité de couches, chaque couche étant signée par un nœud et annexée au message et le premier nœud de destination validant la signature de chaque nœud.

15. Procédé selon la revendication 12, le message étant chiffré à l'aide d'un algorithme de chiffrement de registre.

16. Procédé selon la revendication 12, chaque nœud de voie déchiffrant le message chiffré à l'aide d'une clé de chiffrement du sous-ensemble de l'ensemble de premières clés de chiffrement et le premier nœud de destination déchiffrant le message chiffré à l'aide d'une autre clé de chiffrement du sous-ensemble de l'ensemble de premières clés de chiffrement.

17. Produit programme d'ordinateur comprenant un support d'enregistrement lisible par ordinateur qui met en mémoire un code exécutable par une pluralité de processeurs, le code exécutable comprenant un code pour exécuter le procédé selon la revendication 12.

18. Produit programma d'ordinateur selon la revendication 17, chaque transaction étant enregistrée en tant qu'enregistrement de chaîne de blocs au niveau d'un ou plusieurs nœuds de compte.

19. Produit programme d'ordinateur selon la revendication 17, chaque transaction étant enregistrée sous forme de papier pelure comprenant une pluralité de couches, chaque couche étant signée par un nœud et annexée au message, et le premier nœud de destination validant la signature de chaque nœud.

20. Produit programme d'ordinateur selon la revendication 17, le message étant chiffré à l'aide d'un algorithme de chiffrement de registre.
